# EUROPEAN PATENT APPLICATION

(11) **EP 0 911 823 A1**
(43) Date of publication of application: **28.04.1999**
(21) Application number: 97121336.8
(22) Date of filing: 04.12.1997
(51) Int. Cl.: G11B 15/60

(54) **Method and apparatus for precise positioning of a tape in a magnetic storage device**

(30) Priority: 30.09.1997 US 941306
(71) Applicant: Tandberg Data ASA, 0884 Oslo (NO)
(72) Inventor: Christie, Nicolai W., 0464 Oslo 4 (NO)
(74) Representative: Tönhardt, Marion, Dr.

(57) **Abstract**

A tape positioning arrangement for a tape cartridge and tape drive having a magnetic head mounted on a platform within the tape drive and including drive tape guides arranged on opposite sides of the magnetic head and having guide flanges on lower portions thereof for setting a reference level for a bottom edge of the tape, and tape edge detectors adjacent to each of the guide flanges. The cartridge includes cartridge tape guides for limiting the upper and lower position of the tape. To precisely set the elevation of the tape at the magnetic head, the cartridge is vertically lowered until the tape edge is detected by the tape edge detectors to be just touching the guide flanges of the drive tape guides, and then the cartridge is lowered a further incremental distance to cause the cartridge tape guides to press the tape downward so the lower edge of the tape presses into the guide flanges with a predetermined force.

## Description

### BACKGROUND OF THE INVENTION

The present invention relates to magnetic storage devices and particularly to a method and apparatus for increased mechanical stability of the tape in a high-precision guiding mechanism, to obtain better control of the tape position relative to the magnetic head and an improved tracking performance in a magnetic storage device for linear recording of information.

The present invention enables increased track density and storage capacity, in order to meet the demand for cost effective magnetic storage devices with very high storage capacity.

For linear recording, the ability to position a magnetic head precisely relative to the magnetic tape is of crucial importance. This is important both during writing, when the tracks are to be positioned according to a standardized track table that defines the exact position of each track, and also during reading when the head has to be positioned exactly on the track in order to avoid interference from adjacent tracks, to avoid read errors and the need for electronic error correction or a time-consuming reread operation.

For precise positioning of the tracks during a write operation, a reference is needed, so that the tracks may be positioned exactly relative to that reference. The edge of the magnetic tape, or a servo or reference track written at the beginning of the tape is often used for this purpose. The use of the edge of the magnetic tape or a reference or servo track as a reference is a direct method that eliminates dimensional variations in various mechanical parts or tolerance build up that may otherwise lead to an initial error in the positioning of the tracks and thus a deviation in the track locations from their nominal value. For example, if the reference were chosen to be a point in the tape drive, dimensional variations in the tape drive and the cartridge within the tape drive can lead to an inaccurate positioning of the tape at the magnetic head.

A problem with this type of system for defining the reference position of the tape is that the tape is not entirely free from movement in a direction that is perpendicular to the direction of movement. As an example, the deviation of the tape position is in a vertical direction and the movement of the tape across the magnetic head is in a horizontal direction. The guiding mechanism for the tape may be part of the magnetic storage device or may be included as part of the cartridge, and in both cases the guides are designed with a distance between the guide flanges that is at least equal to the widest tape that may be guided. Due to the limited precision of the sitting process during tape manufacture, and resulting variation of the tape width, as well as due to non-uniformities of the base film, the tape is thus always allowed to travel a certain amount in vertical direction within the guiding mechanism, even when the guiding mechanism itself is very precisely positioned. Also, vibrations from rotating parts of the cartridge may be transferred to the tape that is in front of the head.

As a consequence of this movement, the written tracks can deviate from the position that was determined originally by detection of the tape edge, servo or reference tracks, because the tape position relative to the magnetic head will vary as the tape is run from one end to another. Also, if the tape guiding mechanism is included in the cartridge, any movement of the cartridge itself relative to the tape drive can be added to the variations of the track position just described.

This method has a limited accuracy due to the fact that the chosen reference point, the tape edge, itself moves. One way of compensating for these variations is to use a servo device that enables the magnetic head to follow the variations in track position. This solution however is complex and would in most cases add significant cost to the magnetic storage device, due to the high mass of the magnetic head and the need for a relatively high bandwidth due to the rather high-frequency vibrations of the tape in a vertical direction.

Another method is to use a fixed reference point in the tape drive, that is very tightly connected to the support of the magnetic head and at the same time apply a gentle force that holds the tape down to that reference point, that could be, for example, a guide flange of a tape guide. According to this method, there will, in principle, be no relative movement between the magnetic head and the tracks that are written on the tape, although there still may be a movement of the tape in a perpendicular direction to the direction of movement of the tape, due to irregularities in the tape edge. However, this movement will in principle not show up as a movement of the written tracks relative to the magnetic head, due to the repetitive nature of this movement. The difference between this method and the servo method, is that the servo method compensates for the undesired variations of the tape position, while the latter method attempts to eliminate such variations.

One way of implementing the fixed reference point guiding method is to let the tape pass by a guide that is formed into a very slight covex form in the upper part, so that the tape is slightly stretched in the upper part because of the extra distance it has to travel compared to the lower part. This method results in a gentle pressure that moves the tape down toward the lower flange, that consequently holds the tape in this position. A disadvantage of this method is that the force that acts on the tape is fixed and entirely determined by the precise form of the guide, and since the guide has to be designed for a given tolerance, including compensation for wear, in order to work property with all tapes and cartridges under all conditions, the force that presses the tape toward the flange will in most cases be significantly higher than necessary, which in turn leads to higher wear of the tape edge than necessary, and that also increases the risk that the tape edge gets folded ("doubled") or damaged in some other way.

### SUMMARY OF THE INVENTION

It is an object of the present invention to avoid the disadvantages of the described known methods so as to stabilize the tape in a tape drive and reduce the variation of the tape position in a direction perpendicular to the direction of tape movement across the magnetic head. It is an object of the present invention to provide a precise positioning of the tracks during write operation and a precise positioning of the magnetic head relative to the written tracks during read operation, while at the same time not exposing the tape edge to a higher load than necessary to keep the tape in a correct position, to reduce the risk of damage or excessive wear to the tape. It is an object of the invention to provide for a better control of the position of the tape relative to a magnetic head and improved tracking performance in a magnetic storage device for linear recording of information. It is an object of the invention to provide for an increased track density and storage capacity in a magnetic storage device in order to meet the market demand for cost effective magnetic storage devices with very high storage capacity.

The objects of the present invention are achieved by a method which provides for increased stability of the tape position in a high-precision guiding mechanism including a means for maintaining the tape against a fixed reference point by an adjustable mechanical function that includes variable positioning of the cartridge relative to a fixed reference point or the reverse, and means for optical detection of the position of the tape edge so that the magnetic storage device is able to continuously verify and control the position of the tape.

### BRIEF DESCRIPTION OF THE DRAWINGS

Figure 1 is a schematic plan view of a tape cartridge incorporating the present invention;
Figure 2a is a schematic sectional view taken generally along the line II-II of Figure 1, in a first stage of operation.
Figure 2b is a schematic sectional view taken generally along the line II-II of Figure 1, in a second stage of operation;
Figure 2c is a schematic sectional view taken generally along the line II-II of Figure 1, in a third stage of operation; and
Figure 3 is an elevational view of an alternate tape guide of the present invention.

### DETAILED DESCRIPTION OF THE PREFERRED EMBODIMENTS

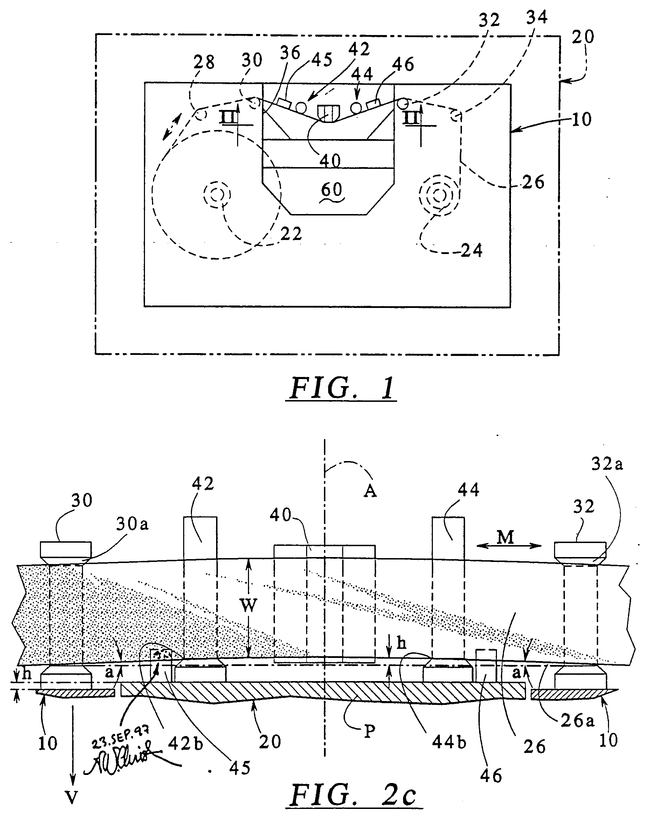

Figure 1 illustrates a cartridge 10 held within a tape drive 20. The cartridge provides a first reel 22, and a second reel 24 and tape 26 wrapped around and spanning therebetween. The first reel 22 can act as supply reel and the second reel 24 can act as tape reel and conversely, the first reel 22 can act as take up reel and the second reel 24 can act as supply reel, depending on the direction of movement M of the tape 26. Pins, guides or rollers 28 and 34 are provided within the cartridge to guide the tape between the reels 22, 24. The cartridge further provides flanged guides 30, 32 for guiding the tape 26 and adjusting its elevation.

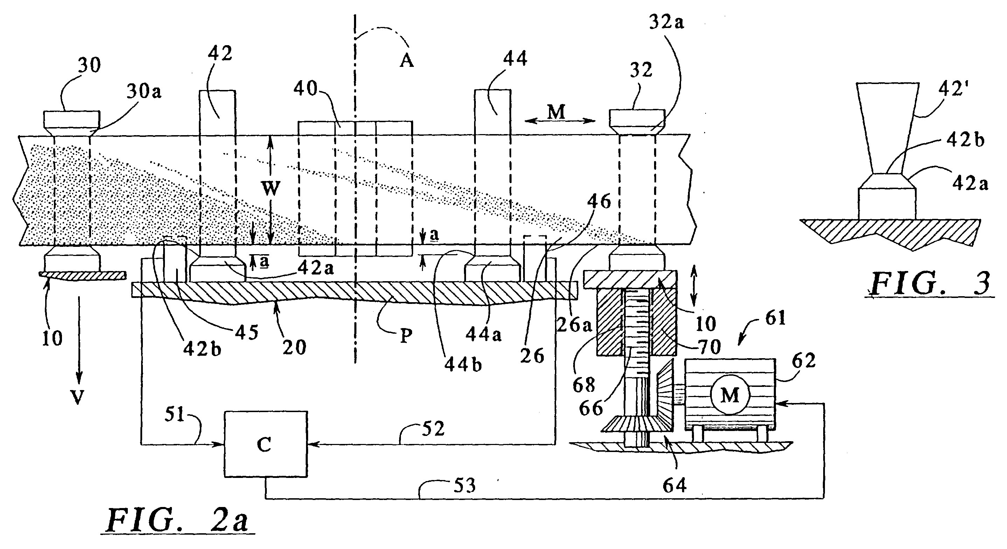

As shown in Figure 2a, the tape drive 20 provides drive tape guides 42, 44 on opposite sides of a magnetic head 40 for positioning the tape as it crosses the magnetic head. Also provided are tape edge detectors 45, 46, such as optical edge detectors, arranged on opposite sides of the drive tape guides, for detecting an edge of the tape. Optical edge detectors typically include a transmitter and a receiver. U.S. Patents 4,639,796 and 5,294,803 describe optical edge detection in detail and are herein incorporated by reference. The edge detectors 45, 46, the drive guides 42, 44 and the magnetic 40 are provided as part of the tape drive 20 and are inserted through an opening 36 of the cartridge 10 for access to the tape 26 passing thereby. A door 60 can be arranged to close the opening 36 for dust protection when the cartridge 10 is not in use.

Figure 2a illustrates the relationship between the tape 26 and the cartridge guides 30, 32 and the drive guides 42, 44. The magnetic head is mounted on an axis A fixed perpendicularly on a platform P, along which the magnetic head may be stepped in small steps so that the write and read cores of the magnetic head are able to cover the complete lateral tape width W. The mechanism for stepping can be a motor driven screw drive such as disclosed in U.S. Patent 4,609,959, or other type drives such as shown in U.S. Patents 5,414,578 and 5,438,469. The two tape guides 42, 44 are mounted on the same platform P and are relatively close to each side of the magnetic head 40. This guide positioning is in order to secure maximum control of the tape position where it is most needed. The reference points of the tape drive are the lower flanges 42a, 44a, particularly circular transitions 42b, 44b of the lower flanges, of the two drive guides 42, 44. The guides are designed to control the lower tape edge only and do not restrict the movement of the tape in the opposite direction. Movement of the tape in this direction (vertically upward) will be restricted by internal guiding in the cartridge, mainly the cartridge guides 30, 32. The tape guides 42, 44 may have a slight conical form expanding in diameter upwardly from the circular transitions 42b, 44b shown for example in Figure 3 as guides 42 which keeps the tape pressured downwardly toward the references 42b, 44b; or the guides may have a cylindrical shape as shown in Figures 2a-2c.

During the load sequence of the cartridge, the cartridge 10 is moved toward the magnetic head 40 and tape guides 42, 44 along a first line that is oriented perpendicular to an axis through the tape contact area of the magnetic head. When the cartridge has reached the nominal position in this direction, the magnetic head 40 and tape guides 42, 44 have entered the tape path defined by the cartridge, particularly by the guides 30, 32, and the tape drive is also able to run the tape and to detect the markers for the beginning and end of the tape. At this point, the position of the tape is solely determined by the internal guides 30, 32 of the cartridge, as shown in Figure 2a. According to Figure 2a, there is a distance a between the tape edge 26a and the circular transitions 42b, 44b of the guide Ranges 42a, 44a, so that the drive guides 42, 44 do not pose any restrictions on the vertical position of the tape 26. The tape drive neither exerts any forces in a vertical direction on the tape, except for a possible effect of conical tape guides 42, 44 as shown in Figure 3.

A controller C is provided which receives signals S1, S2 from the edge detectors 45, 46.

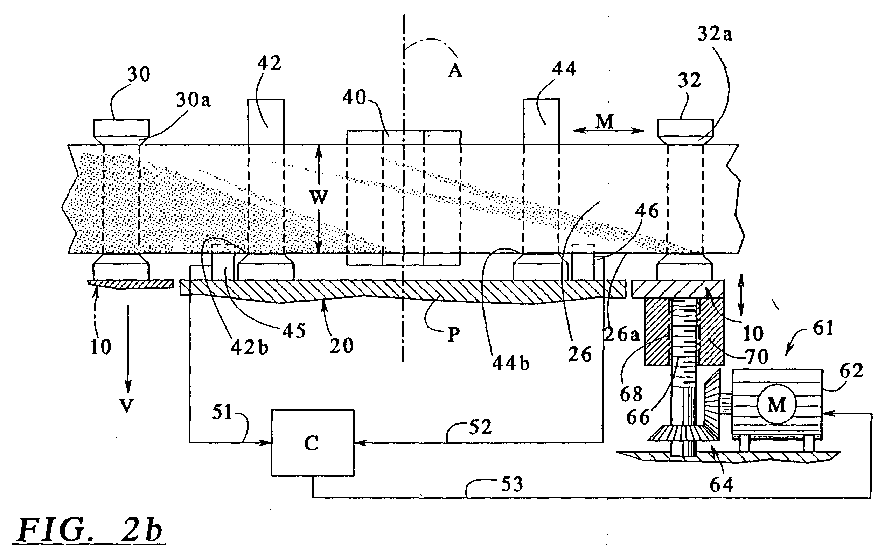

As shown in Figure 2b, the cartridge 10 is then moved from the position of Figure 2a in a vertical direction V, perpendicular to the first line, such as downwardly as shown in the figures, towards the reference points defined by the circular transitions 42b, 44b of the lower flanges 42a, 44a of the tape guides 42, 44, while the tape drive continuously runs the tape at a suitable speed and the detectors 45, 46 and the controller C detect the position of the lower tape edge 26a. The tape is run in order to eliminate any slack in the tape path as well as to eliminate the friction between the tape and the guides in vertical direction. In this way, the magnetic storage device is able to control the vertical position of the tape 26 that is perpendicular to the direction M of tape travel, relative to the fixed reference points inside the drive.

The cartridge 10 is moved vertically by conventional mechanical or electromechanical mechanisms such as a motor driven screw drive 61, shown schematically in Figure 2a. A motor 62 and gear arrangement 64 turn a threaded shaft 66 inside a threaded bore 68 of a follower 70 supporting the cartridge 10. The cartridge is fixed for movement with the follower. Other simple mechanical or electromechanical means can be provided for raising and lowering the cartridge small amounts. The various known arrangements which are known to move or "step" magnetic heads can be applied to move the cartridge 10 in small vertical movements. For example, the drives for vertically positioning magnetic heads disclosed in U.S. Patents 4,609,959; 5,414,578; and 5,438,469 can be adapted for this function. A cam arrangement for instigating small vertical movement by rotation of a cam can also be provided.

Alternately, rather than the cartridge guides 30, 32 moving and the drive guides held stationary, the drive guides 42, 44 can be moved upwardly and the cartridge guides held stationary; or both cartridge guides 30, 32 and drive guides moved vertically toward and away from each other. Thus, the moving mechanism described can be applied to the platform P and/or the cartridge 10.

The relative movement of the cartridge in the direction V continues until the drive edge detectors 45, 46 detect the cartridge to be in a nominal position as shown in Figure 2b and emit a corresponding signal which the controller recognizes as a nominal position edge detection. The nominal position of the cartridge in the vertical direction shown is defined as the position of the cartridge where the lower part of the tape edge is barely touching the reference points 42b, 44b defined by the lower Ranges 42a, 44a of the tape guides 42, 44 of the drive. That is, zero optically measured distance between the lower tape edge 26a and the reference points of the drive. At this point there is still no guiding forces outside of the cartridge 10 that act on the tape.

To finish the load sequence, the controller C then continues to move the cartridge by a small pre-defined amount h in the same direction V as during the rest of load sequence, vertically downwardly as shown progressively in Figures 2b and 2c, from the nominal position shown in Figure 2b to the operating position shown in Figure 2c. The controller C issues one or more step signals S3 to the step motor 62 to lower the cartridge 10. This final movement will force the tape out of its nominal path by a small, pre-defined but precisely controlled amount h, that causes a precisely defined force to act on the tape when it is pressed against the reference points 42b, 44b of the drive.

During normal operation, the detectors 45, 46 may still continuously detect the tape edge position and the controller C can thus verify that the position of the tape is correct, and eventually handle situations where a tape constantly or temporarily leaves the established operating position for example by repositioning the cartridge 10 using the screw drive 61. This event however should not normally occur.

Although the present invention has been described with reference to a specific embodiment, those of skill in the art will recognize that changes may be made thereto without departing from the scope and spirit of the invention as set forth in the appended claims.

The features disclosed in the foregoing description, in the claims and/or in the accompanying drawings may, both separately and in any combination thereof, be material for realising the invention in diverse forms thereof.

## Claims

1. A tape drive for precisely positioning a tape relative to a magnetic head, the tape provided from a cartridge loaded into the tape drive, comprising:
a magnetic head;
a platform supporting said magnetic head;
tape guides arranged on said platform on each side of said magnetic head and having guide flanges arranged thereon defining a reference position for an edge of said tape;
a tape edge detector arranged adjacent said magnetic head for sensing the position of said tape edge; and
means for relatively positioning said tape to said reference position.

2. The tape drive according to claim 1, wherein said tape edge detector comprises two tape edge sensors, one each arranged adjacent each of said tape guides.

3. The tape drive according to claim 1, wherein said tape guides provide conically tapered surfaces.

4. The tape drive according to claim 1, wherein said edge detector comprises at least one optical detector.

5. The tape drive according to claim 1, wherein said tape drive further comprises a mechanism for precisely lowering said cartridge a defined amount with respect to said tape guides to maintain said tape edge at said reference position.

6. The tape drive according to claim 1, wherein said tape due further comprises a mechanism for altering the relative spacing between said cartridge and said tape guides in a direction perpendicular to a direction of tape travel.

7. A method for positioning a tape relative to a magnetic head in a direction perpendicular to a running direction of said tape across said magnetic head, comprising the steps of:
providing said tape stored in a tape cartridge and having a portion of said tape guided within said cartridge;
providing in a tape drive a magnetic head and a guide surface adjacent said magnetic head for defining a reference position for one edge of said tape;
providing an edge detector adjacent said guide surface;
inserting said cartridge into said tape drive and engaging said tape with said magnetic head;
moving said cartridge toward said guide surface in a direction perpendicular to a running direction of said tape within said tape drive until said edge is detected to be lightly touching said guide surface;
moving said cartridge a predetermined incremental further amount in said direction perpendicular to said running direction of said tape to press said tape against said guide surface with a predetermined force.

8. The method according to claim 7, wherein said guide surface comprises two cylindrical tape guides having conical guide flanges extending radially therefrom, a top surface of said guide flanges providing a contact surface for said tape edge.

9. The method according to claim 8, wherein said tape edge detectors comprise first and second tape edge sensors one each mounted on opposite sides of said magnetic head.

10. The method according to claim 9, wherein said tape edge detectors are optical detectors.

11. A tape guiding system for a tape to be moved in a longitudinal direction past a magnetic head, said tape having a plurality of parallel tracks extending along said tape in said first direction and first and second tape edges across a width of said tape, comprising:
first and second inside tape guides arranged adjacent to opposite lateral sides of said head; and
first and second outside tape guides arranged outside said first and second inside tape guides respectively, said first and second inside tape guides having a first guide surface applied thereon located at a predetermined position adjacent said first edges, said first and second outside tape guides having a second guide surface applied thereon, said second guide surface adjacent said second edge, said first guide surface and said second guide surface pressing said first and second edges respectively during movement of said tape.

12. The guiding system according to claim 11, wherein said outside guides are provided inside a tape cartridge and said inside guides are provided by a tape drive. mechanism.

13. The guiding system according to claim 11, wherein said outside guides are moveable relative to said inside guides in a direction along said width of said tape to cause said first edge of said tape to press against said first guide surface.

14. The guiding system according to claim 11, wherein said inside guides are moveable relative to said outside guides in a direction along said width of said tape to cause said second edge of said tape to press against second guide surface.

15. The guiding system according to claim 11, wherein said first and second guide surfaces comprise guide flanges applied onto said inside and outside tape guides.

16. The guiding system according to claim 15, wherein said inside tape guides are conically shaped.

17. The guiding system according to claim 15, wherein said outside tape guides are conically shaped.
